# EUROPEAN PATENT APPLICATION

(11) **EP 2 589 836 A1**
(43) Date of publication of application: **08.05.2013**
(21) Application number: 11821407.1
(22) Date of filing: 24.06.2011
(51) Int. Cl.: F16H 47/02, F16H 61/02

(54) **TRAVEL CONTROL APPARATUS FOR WORKING VEHICLE**

(30) Priority: 31.08.2010 JP 2010194083
(71) Applicant: Hitachi Construction Machinery Co., Ltd., Bunkyou-ku Tokyo 112-0004 (JP)
(72) Inventor: YAMAZAKI, Yasuo, Tsuchiura-shi Ibaraki 300-0013 (JP); KAWAHARA, Shouroku, Tsuchiura-shi Ibaraki 300-0013 (JP)
(74) Representative: Jansen, Cornelis Marinus
(86) International application number: PCT/JP2011/064570
(87) International publication number: WO 2012/029389

(57) **Abstract**

A working vehicle travel control apparatus, comprising: a variable displacement hydraulic pump; a variable displacement hydraulic motor connected in a closed circuit to the hydraulic pump and driven upon pressure oil from the hydraulic pump; a first control unit controls a motor displacement angle of the hydraulic motor by an electrical signal; a constant mesh transmission includes a clutch device that includes a High clutch section transmits power at a first transmission gear ratio and a Low clutch section that transmits power at a second transmission gear ratio, which is greater than the first transmission gear ratio, the constant mesh transmission transmits or interrupts power from the hydraulic motor; and a second control unit controls the first control unit so as to reduce the motor displacement angle to a predetermined value when the transmission is switched from the first transmission gear ratio to the second transmission gear ratio.

## Description

### TECHNICAL FIELD

The present invention relates to a travel control apparatus of a working vehicle such as a wheel loader.

### BACKGROUND ART

There is a conventionally known working vehicle travel control apparatus that includes a transmission using a clutch that can be controlled only into a state of full engagement or a state of full disengagement, in which occurrence of a shock from when the disengaged clutch is engaged again is reduced (refer to Patent Literature 1). More specifically, occurrence of a gear shift shock when the clutch is engaged again is reduced by controlling the displacement angle of a hydraulic pump and matching the number of rotation between a power upstream-side with a power downstream-side of the clutch.

### CITATION LIST

### PATENT LITERATURE

[Patent Literature 1] Japanese Laid-Open Patent Publication No. 2002-139148

### SUMMARY OF THE INVENTION

### TECHNICAL PROBLEMS

The apparatus of Patent Literature 1 described above is configured to reduce a gear shift shock by matching the number of rotation between a power upstream-side with a power downstream-side of the clutch, and hence a synchronization mechanism for matching the number of rotation is required.

### SOLUTION TO PROBLEMS

According to first aspect of the present invention, a working vehicle travel control apparatus, comprising: a variable displacement hydraulic pump that is driven by an engine; a variable displacement hydraulic motor that is connected in a closed circuit to the hydraulic pump and driven upon pressure oil from the hydraulic pump; a first control unit that controls a motor displacement angle of the hydraulic motor by an electrical signal; a constant mesh transmission that includes a clutch device that includes a High clutch section that transmits power at a first transmission gear ratio and a Low clutch section that transmits power at a second transmission gear ratio, which is greater than the first transmission gear ratio, the constant mesh transmission that transmits or interrupts power from the hydraulic motor; and a second control unit that controls the first control unit so as to reduce the motor displacement angle to a predetermined value when the transmission is switched from the first transmission gear ratio to the second transmission gear ratio.
According to the second aspect of the present invention, in the working vehicle travel control apparatus of the first aspect, it is preferred that the predetermined value of the motor displacement angle is set to be greater than a minimum displacement angle of the hydraulic motor and a minimal motor displacement angle at which the working vehicle can be driven by the hydraulic motor.
According to the third aspect of the present invention, in the working vehicle travel control apparatus of the first or second aspect, it is preferred that the second control unit controls the first control unit so that when the transmission is switched from the first transmission gear ratio to the second transmission gear ratio, after the motor displacement angle is reduced to the predetermined value and fixed to the predetermined value for a predetermined period of time, and then the motor displacement angle is recovered.
According to the fourth aspect of the present invention, a wheel loader, comprising a travel control apparatus according to any one of the first to third aspect.

### ADVANTAGEOUS EFFECT OF THE INVENTION

According to the present invention, a gear shift shock can be reduced at the time of switching from High to Low.

### BRIEF DESCRIPTION OF THE DRAWINGS

[FIG. 1] FIG. 1 is a side view of a working vehicle to which the travel control apparatus according to an embodiment of the present invention is applied.
[FIG. 2] FIG. 2 is a diagram showing the outline structure of the travel control apparatus according to the present embodiment.
[FIG. 3] FIG. 3 is a diagram of the configuration of a transmission.
[FIG. 4] FIG. 4 is a diagram showing a shift change process from High to Low.
[FIG. 5] FIG. 5(a) and FIG. 5(b) are diagrams showing a traveling performance diagram of a working vehicle to which the travel control apparatus according to the present embodiment is applied and a comparison example, respectively.

### DESCRIPTION OF EMBODIMENTS

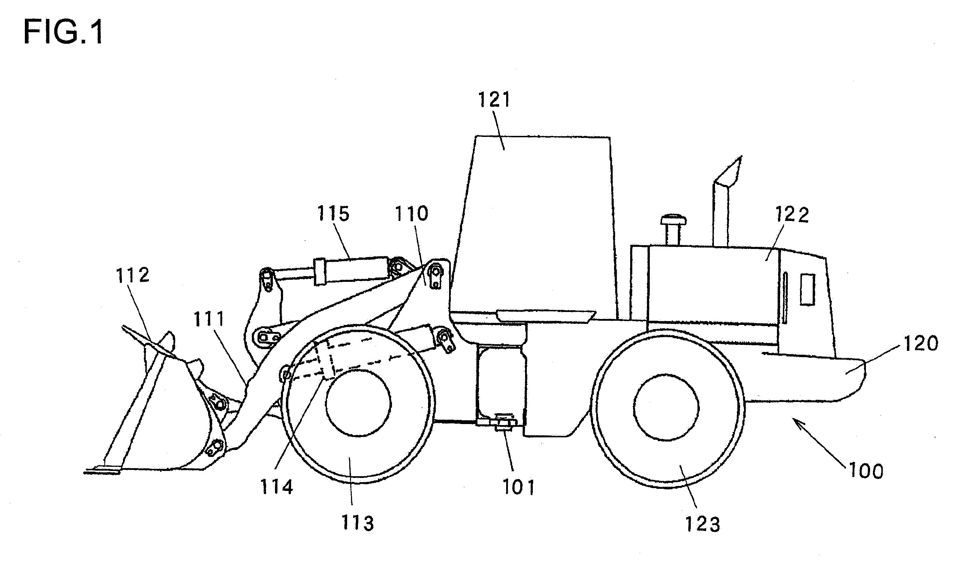

A working vehicle travel control apparatus according to an embodiment of the present invention will now be explained with reference to FIG. 1 to FIG. 5.

FIG. 1 is a side view of a wheel loader that is an example of a working vehicle to which the travel control apparatus according to the present embodiment is applied. A wheel loader 100 is constituted with a front body 110 that includes an arm 111, a bucket 112, tires 113, etc., and a rear body 120 that includes a driver's cabin 121, an engine bay 122, tires 123, etc. The arm 111 vertically rotates (moves up and down) on actuation of an arm cylinder 114 and the bucket 112 vertically rotates (dumps or crowds) on actuation of a bucket cylinder 115. The front body 110 and the rear body 120 are rotatably connected with each other through a center pin 101, so that expansion and contraction of a steering cylinder (not shown in the figure) causes the front body 110 to turn right and left with respect to the rear body 120.

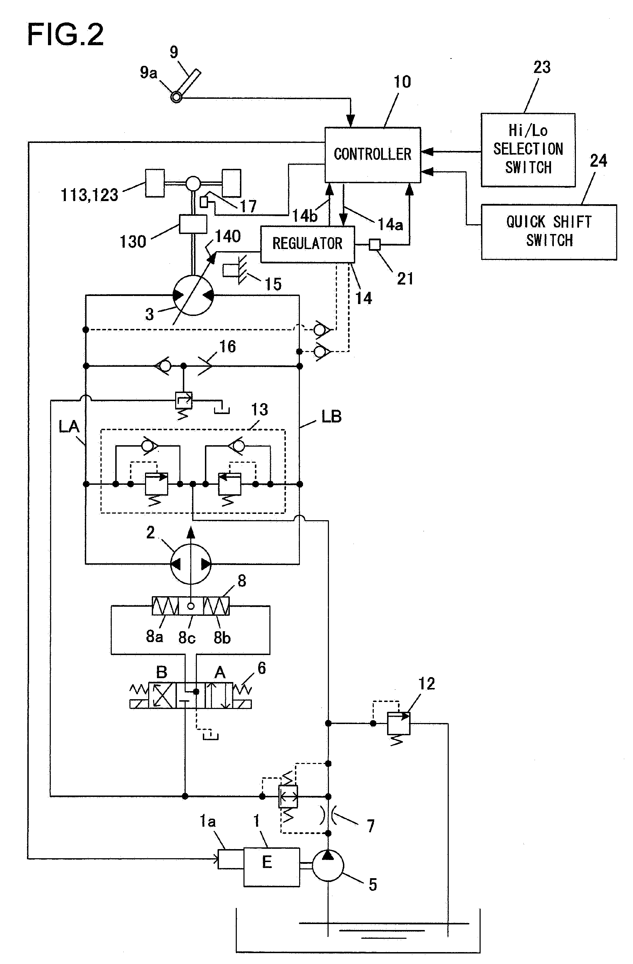

FIG. 2 is a diagram showing the outline structure of the travel control apparatus according to the present embodiment. A variable displacement hydraulic pump 2, which is driven by an engine 1, and a variable displacement hydraulic motor 3 are connected in a closed circuit through a pair of main lines LA and LB and thus a so-called HST circuit is configured.

Pressure oil from a charge pump 5, which is driven by the engine 1 is led to a displacement cylinder 8 through a forward/reverse switching valve 6. The forward/reverse switching valve 6 is operated on a signal from a controller 10. As illustrated, when the forward/reverse switching valve 6 is in the neutral position, pressure oil from the charge pump 5 acts upon both valve chambers 8a and 8b of the displacement cylinder 8 through a restrictor 7 and the forward/reverse switching valve 6. In this state, pressure acts equally upon the oil chambers 8a and 8b and a piston 8c is in the neutral position. For this reason, a displacement qp of the hydraulic pump 2 becomes 0 and a pump discharge rate Q is 0.

When the forward/reverse switching valve 6 is switched to the A side, upstream-side pressure and downstream-side pressure of the restrictor 7 acts upon the valve chambers 8a and 8b, respectively. This causes a pressure difference between the valve chambers 8a and 8b of the cylinder 8 and the piston 8c is displaced to the right direction in the figure. Due to this, the pump displacement dp (pump displacement amount) of the hydraulic pump 2 is increased, pressure oil from the hydraulic pump 2 is led to the hydraulic motor 3 through the main line LA, the hydraulic motor 3 rotates forward, and the vehicle travels forward. When the forward/reverse switching valve 6 is switched to the B side, the piston 8c of the displacement cylinder 8 is displaced to the left direction in the figure, pressure oil from the hydraulic pump 2 is led to the hydraulic motor 3 through the main line LB, and the hydraulic motor 3 rotates reversely.

Rotation of the hydraulic motor 3 is shifted by a transmission 130, the shifted rotation is transmitted to the tires 113 and 123 through a propeller shaft and axle, and thus the vehicle travels. The transmission 130 can be switched between two speeds, Low and High, by an operation with a High/Low selection switch 23.

An accelerator pedal 9 is provided with an operation amount detector 9a, which detects an operation amount of the accelerator pedal 9, and a signal from the operation amount detector 9a is input to the controller 10. The controller 10 outputs a rotational speed control signal to an engine control unit 1a and the engine rotational speed is controlled according to the signal from the operation amount detector 9a. Pressure oil from the charge pump 5, passing through the restrictor 7 and a check valve in an overload relief valve 13, is led to the main lines LA and LB and replenished into the HST circuit. Downstream-side pressure of the restrictor 7 is restricted by a charge relief valve 12 and the maximum pressure at the main lines LA and LB is restricted by the overload relief valve 13.

A displacement qm (motor displacement angle) of the hydraulic motor 3 is controlled by a regulator 14. The regulator 14, which is an electrical regulator that includes a solenoid valve, a proportional solenoid valve, etc., is driven by control current that is output from the controller 10 through signal lines 14a and 14b so as to drive a displacement control lever 140 and change the motor displacement angle qm. A motor displacement control unit is provided with a stopper 15. The displacement control lever 140 comes to a stop against the stopper 15 so as to mechanically restrict the minimum value of the motor displacement angle qm to a predetermined value qmin. It is to be noted that when the regulator 14 is not energized, the displacement control lever 140 comes to a stop against the stopper 15 and the motor displacement angle qm is maintained at the minimum value qmin. With an increase in control current to be output to the regulator 14, the motor displacement angle qm increases.

The controller 10 is configured to include an arithmetic processing unit that has a CPU, a ROM, a RAM, other peripheral circuits, etc. A signal from a pressure detector 21, which detects pressure (travel load pressure Pt) at the main lines LA and LB, a signal from a vehicle speed sensor 17, which detects the vehicle speed, a signal from the High/Low selection switch 23, and a signal from a quick shift switch 24 are input to the controller 10. The quick shift switch 24 is a switch that is provided, separately from the High/Low selection switch 23, on a grip of a cargo handling lever (not illustrated) so as to switch between High and Low.

The controller 10 controls the motor displacement angle qm in accordance with a travel load pressure Pt (PID control). With an increase in the travel load pressure Pt, the motor displacement angle qm gradually increases from the minimum value qmin to the maximum value qmax. The rotational speed of the hydraulic motor 2 is expressed by pump discharge rate Q × motor displacement efficiency / motor displacement qm and the vehicle speed is proportional to the motor rotational speed. Accordingly, when the travel load pressure Pt is great and the motor displacement angle qm is great, the vehicle can travel at a low speed and high torque, and, on the other hand, when the travel load Pt is little and the motor displacement angle qm is little, the vehicle can travel at a high speed and low torque.

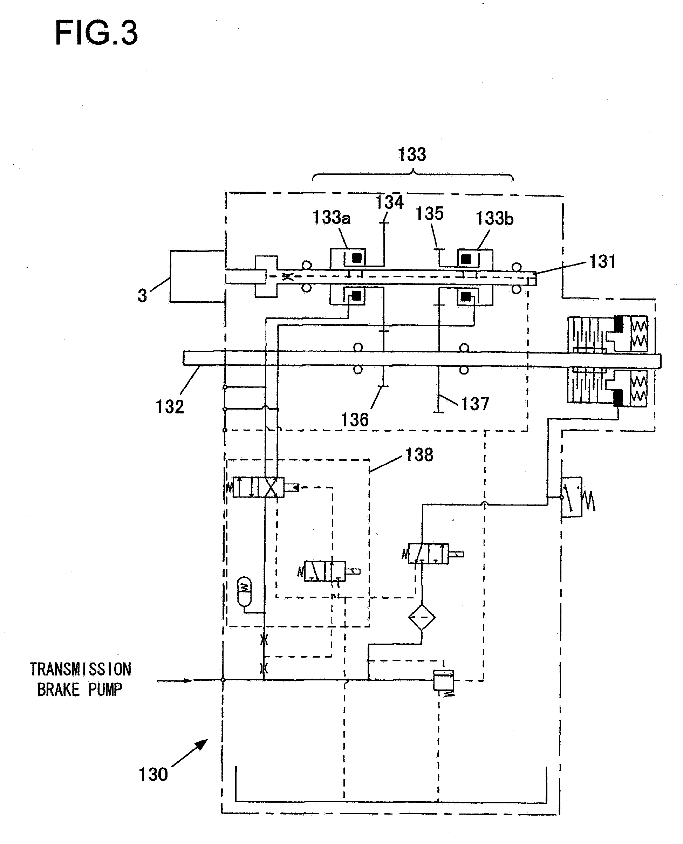

FIG. 3 shows the configuration of the transmission 130. The transmission 130 is a so-called constant mesh transmission. The transmission 130 includes an input shaft 131 through which power from the hydraulic motor 3 is input, an output shaft 132 through which the input power is output to the axle, and a clutch device 133 that transmits or interrupts power from the input shaft 131 to the output shaft 132.

The clutch device 133 is a wet multi-disk clutch that transmits or interrupts power by press-contacting or spacing a plurality of axially juxtaposed disks. The clutch device 133 causes one of a high gear 134 and a low gear 135 to rotate integrally with the input shaft 131. The high gear 134 and the low gear 135 are in mesh with driven gears 136 and 137 that are coupled with the output shaft 132, respectively. In a state where the low gear 135 is connected to the input shaft 131 (low state), rotation of the input shaft 131 is transmitted to the output shaft 132 through the low gear 135 and the driven gear 137. In a state where the high gear 134 is connected to the input shaft 131 (high state), rotation of the input shaft 131 is transmitted to the output shaft 132 through the high gear 134 and the driven gear 136. As a result, the output shaft 132 rotates to a predetermined gear ratio and the vehicle travels at a speed in accordance with the rotation of the output shaft 132.

The clutch device 133 includes a high clutch 133a and the high gear 134 for transmitting power at the first transmission gear ratio and a low clutch 133b and the low gear 135 for transmitting power at the second transmission gear ratio, which is greater than the first transmission gear ratio. The high clutch 133a and the low clutch 133b operate upon pressure oil from a transmission control valve 138. The transmission control valve 138 is controlled by an instruction from the controller 10. When the transmission control valve 138 is switched and pressure that acts upon the low clutch 133b rises, the low clutch 133b is gradually connected and then switched to the low state (refer to FIG. 3). On the other hand, when pressure that acts upon the high clutch 133a rises due to switching of the transmission control valve 138, the high clutch 133a is gradually connected and then switched to the high state.

A High/Low switch-type transmission as mentioned above has advantages such as lower manufacturing cost and better fuel economy compared with an automatic transmission that shifts gear automatically. However, at the time of switching from High to Low, gear shift shock occurs due to the gear ratio between the high gear 134 and the low gear 135. For example, a threefold difference in gear ratio results in one third the vehicle speed and threefold the traction force when the transmission is shifted down from High to Low, thereby causing a great shock due to a decrease in the vehicle speed, slip of the tires due to an increase in the traction force, and the like.

In order to reduce such gear shift shock, permitting gear shift from High to Low in a state where the vehicle speed is sufficiently reduced is considered. In addition, in the present embodiment, a gear shift shock is reduced by reducing the motor displacement angle of the hydraulic motor 3 at the time of switching from High to Low.

More specifically, when instructed to switch the transmission from High to Low by an operation with the High/Low selection switch 23, the controller 10 permits gear shift if the vehicle speed is less than a gear shift limit. When instructed to switch the transmission from High to Low with the vehicle speed being equal to or greater than the gear shift limit, the controller 10 permits gear shift if the vehicle speed decreases to the gear shift limit. On the other hand, when instructed to switch the transmission from High to Low by an operation with the quick shift switch 24, the controller 10 permits gear shift only if the High/Low selection switch 23 is operated to High and the vehicle speed is less than the gear shift limit. If the vehicle speed is equal to or greater than the gear shift limit and the quick shift switch 24 is operated, the controller 10 judges that a signal from the quick shift switch 24 is invalid. Here, the gear shift limit is set in advance to an appropriate value so as to reduce a gear shift shock at the time of switching from High to Low (10 km/h for instance). It is to be noted that the motor displacement angle is not particularly controlled when switching from Low to High.

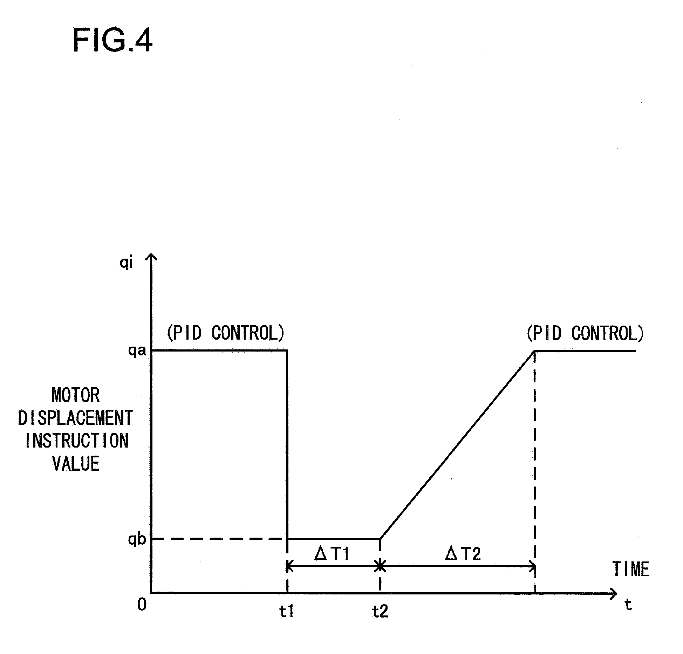

FIG. 4 shows a shift change process from High to Low. In FIG. 4, the horizontal axis represents time and the vertical axis represents a motor displacement instruction value. A motor displacement instruction value qi is an instruction value of the motor displacement angle that is output from the controller 10 to the regulator 14 of the hydraulic motor 3. It is assumed that the vehicle is in operation in High state and the vehicle speed is less than the gear shift limit and the motor displacement instruction value qi is qa. In a normal state other than when the gear is shifted, the motor displacement is PID-controlled based upon a circuit pressure detected by the pressure detector 21.

If, in this state, the operator operates the High/Low selection switch 23 or the quick shift switch 24 so as to switch the transmission from High to Low at a time point t1, the controller 10 outputs a predetermined value qb to the regulator 14 as the motor displacement instruction value qi so as to reduce the motor displacement angle. The predetermined value qb is set to a motor displacement angle equal to or greater than the minimum value qmin described above, so that a minimal amount of oil with which the vehicle can be driven by the hydraulic motor 3 can be ensured even if, for example, an electrical abnormality occurs at the regulator 14.

Before a predetermined elapsed time ΔT1 has elapsed from the time point t1, the motor displacement instruction value qi is fixed to the predetermined value qb. After the elapsed time ΔT1 has elapsed and the vehicle traction force has been sufficiently reduced, the controller 10 outputs at a time point t2 to the transmission 140 an instruction to switch the transmission from High to Low. In accordance with the instruction from the controller 10, the transmission control valve 138 is switched, pressure that acts upon the low clutch 133b rises, and the low clutch 133b is gradually connected and then switched to Low state.

After outputting the instruction to switch the transmission from High to Low at the time point t2, the controller 10 outputs an instruction to the regulator 14 so as to recover the motor displacement instruction value qi from the predetermined value qb to a value in accordance with the PID control during a predetermined transition time ΔT2. The motor displacement instruction value qi increases with a predetermined slope during the transition time ΔT2, and, after the transition time ΔT2 has elapsed, the PID control is resumed based upon the circuit pressure at that time point.

Here, given that the gear ratio between the high gear 134 and the low gear 135 is threefold, the predetermined value qb of the motor displacement instruction value qi is set in advance to an appropriate value that is less than 1/3 of the motor displacement instruction value qa, e.g., approximately 1/4 of qa, at the time of the instruction to switch the transmission from High to Low in view of delay in the control system and the like. An appropriate value (400 msec for instance) is set in advance to the predetermined elapsed time ΔT1 as a latency during which from when the motor displacement instruction value qb is output to when the motor displacement angle of the hydraulic motor 3 is switched in accordance with the instruction value qb. In addition, the predetermined transition time Δ T2 is set in advance to an appropriate period of time (1 sec for example) as a ramp time during which the control of the motor displacement angle is smoothly recovered to the normal PID control. In order to achieve a smooth switching from High to Low, the predetermined value qb, the elapsed time ΔT1, and the transition time ΔT2 are not limited to the examples given above and appropriate values are set in accordance with specifications of the vehicle and the like.

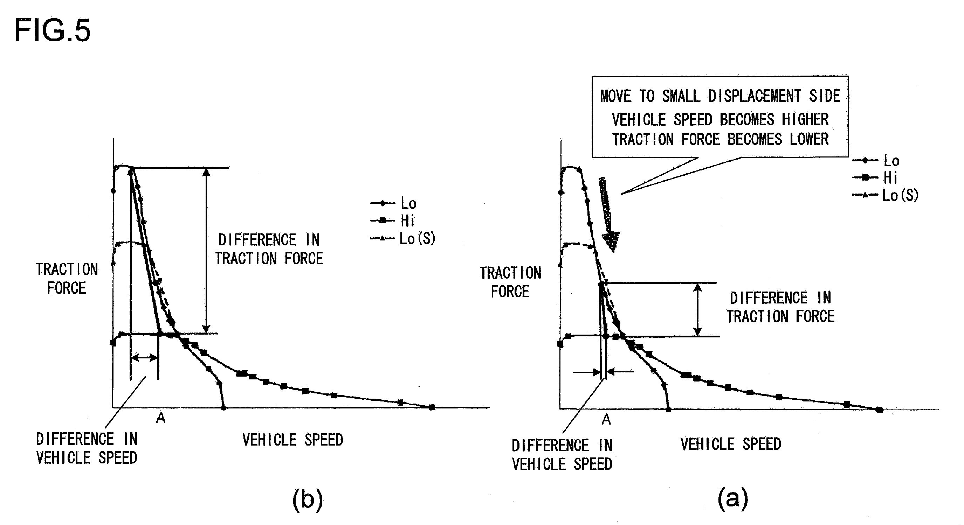

The operations of the travel control apparatus according to the present embodiment explained above will now be explained. FIG. 5(a) shows an example of traveling performance diagram of a vehicle to which the travel control apparatus according to the present embodiment is applied. Here, the gear ratio between the high gear 134 and the low gear 135 is assumed to be threefold. FIG. 5(b) shows a comparison example. In FIGS. 5(a) and 5(b), the horizontal axis represents the vehicle speed and the vertical axis represents the traction force. As shown in the comparison example of FIG. 5(b), when the transmission gear is shifted from High to Low at A, the vehicle speed becomes 1/3 and the traction force becomes threefold at the moment of shift down. This causes a great shock due to a decrease in the vehicle speed and slip of tires and the like due to an increase in the traction force.

In contrast to this, as shown in FIG. 5(a), in the present embodiment, displacement of the hydraulic motor 3 is shifted to a small displacement side at the time of switching the transmission from High to Low. By shifting the motor displacement angle to a small displacement, the vehicle speed at the time of switching to Low state becomes higher, i.e., reduction in the vehicle speed decreases becomes lower and the traction force also becomes lower. This causes gear shift shock at the time of switching from High to Low to be reduced, thereby achieving a smooth gear shift operation.

The following advantages can be achieved according to the present embodiment explained above.
(1) A travel control apparatus includes the variable displacement hydraulic pump 2, which is driven by an engine, the variable displacement hydraulic motor 3, which is connected in a closed circuit to the hydraulic pump 2 and driven on pressure oil from the hydraulic pump 2, the regulator 14, which controls the motor displacement angle of the hydraulic motor 3 by an electrical signal, and the clutch device 133 that includes High clutch section (the high clutch 133a and the high gear 134), which transmits power at a first transmission gear ratio, and a Low clutch section (the low clutch 133b and the low gear 135), which transmits power at a second transmission gear ratio, which is greater than the first transmission gear ratio, and includes the constant mesh transmission 130, which transmits or interrupts power from the hydraulic motor 3, and the controller 10, which controls the regulator 140 so as to reduce the motor displacement angle to the predetermined value qb when switching the transmission 130 from the first transmission gear ratio to the second transmission gear ratio. By reducing the motor displacement angle when switching the transmission gear ratio, the vehicle speed relatively becomes higher and the traction force becomes lower compared to when the motor displacement angle is not reduced. As a result, when using the High/Low switching-type transmission 130, which has low manufacturing cost and good vehicle fuel consumption, a gear shift shock at the time of switching the transmission from High to Low can be reduced.
(2) The predetermined value qb of the motor displacement angle, which is greater than the minimum displacement angle qmin of the hydraulic motor 3, is a minimal motor displacement angle at which a working vehicle can be driven by the hydraulic motor 3. If the predetermined value qb is 0, the vehicle becomes unable to travel when, for instance, a harness through which the hydraulic motor 3 is controlled is disconnected. By setting the predetermined value qb to a value described above, a minimal amount of oil used to move the vehicle is ensured, thereby enabling the vehicle to travel even if the harness is disconnected.
(3) When the transmission is switched from High to Low, after the motor displacement angle is reduced to the predetermined value qb and fixed to the predetermined value qb for the predetermined period of time ΔT1, and then the motor displacement angle is recovered. This allows a period of time during which the motor displacement angle is changed actually and a smooth gear shift to be achieved.

The above explanation is merely an example and the present invention is not limited to the configuration of the above embodiment. For instance, the travel control apparatus described above may be applied to a working vehicle other than a wheel loader, e.g., a road machine such as a tire roller and a road roller.

Although the variety of embodiments and examples of variations are described above, the present invention is not to be limited only to those contents. The scope of the present invention includes other possible embodiments invented within the scope of the technical idea of the present invention.

The disclosure of the following priority application is herein incorporated by reference:
Japanese Patent Application No. 2010-194083 (filed on August 31, 2010)

## Claims

1. A working vehicle travel control apparatus, comprising:
a variable displacement hydraulic pump that is driven by an engine;
a variable displacement hydraulic motor that is connected in a closed circuit to the hydraulic pump and driven upon pressure oil from the hydraulic pump;
a first control unit that controls a motor displacement angle of the hydraulic motor by an electrical signal;
a constant mesh transmission that includes a clutch device that includes a High clutch section that transmits power at a first transmission gear ratio and a Low clutch section that transmits power at a second transmission gear ratio, which is greater than the first transmission gear ratio, the constant mesh transmission that transmits or interrupts power from the hydraulic motor; and
a second control unit that controls the first control unit so as to reduce the motor displacement angle to a predetermined value when the transmission is switched from the first transmission gear ratio to the second transmission gear ratio.

2. A working vehicle travel control apparatus according to claim 1, wherein:
the predetermined value of the motor displacement angle is set to be greater than a minimum displacement angle of the hydraulic motor and a minimal motor displacement angle at which the working vehicle can be driven by the hydraulic motor.

3. A working vehicle travel control apparatus according to claim 1 or claim 2, wherein:
the second control unit controls the first control unit so that when the transmission is switched from the first transmission gear ratio to the second transmission gear ratio, after the motor displacement angle is reduced to the predetermined value and fixed to the predetermined value for a predetermined period of time, and then the motor displacement angle is recovered.

4. A wheel loader, comprising a travel control apparatus according to any one of claim 1 to claim 3.
